# FASCICULE DE BREVET EUROPEEN

(11) **EP 4 159 576 B1**
(45) Date de publication et mention de la délivrance du brevet: **01.01.2025**
(21) Numéro de dépôt: 22197066.8
(22) Date de dépôt: 22.09.2022
(51) Int. Cl.: B61D 17/18, B60J 5/04, B61D 19/02, E06B 5/20

(54) **VANTAIL DE PORTE POUR VÉHICULE DE TRANSPORT DE PERSONNES A PROPRIÉTÉS AMÉLIORÉES D'ISOLATION ACOUSTIQUE, PORTE ET VEHICULE AINSI ÉQUIPÉS**
TÜRBLATT FÜR PERSONENTRANSPORTFAHRZEUG MIT VERBESSERTEN SCHALLDÄMMUNGSEIGENSCHAFTEN, TÜR UND FAHRZEUG DAMIT
DOOR LEAF FOR A PASSENGER TRANSPORT VEHICLE WITH IMPROVED SOUND INSULATION PROPERTIES, DOOR AND VEHICLE EQUIPPED WITH SAME

(30) Priorité: 01.10.2021 FR 2110394
(43) Date de publication de la demande: 05.04.2023
(73) Titulaire: Faiveley Transport Tours, 37701 Saint Pierre des Corps Cedex (FR)
(72) Inventeur: DE BAST, Jean-François, 37270 Montlouis-sur-Loire (FR); MONTANIE, Thierry, 75016 Paris (FR)
(74) Mandataire: IXAS Conseil

(56) Documents cités:
- CN-A- 112 277 983
- DE-A1- 102014 210 771
- DE-T2- 69 936 046

## Description

### Domaine technique de l'invention

La présente invention concerne le domaine technique des portes destinées à équiper des véhicules de transport de personnes, notamment du type train, tramway, métros ou encore trolleybus ou bus. L'invention vise plus spécifiquement de telles portes, qui sont munies d'au moins un vantail présentant des propriétés améliorées d'isolation acoustique.

### Etat de la technique

De manière habituelle, un vantail pour véhicule de transport de personnes comprend tout d'abord deux parements, destinés à être placés sur les côtés respectivement intérieur et extérieur de la caisse du véhicule. Ces parements délimitent ainsi un espace interne, qui est occupé par un remplissage réalisé essentiellement en un matériau rigide, collé sur les parements, l'ensemble formant un sandwich.

Le problème technique, visé plus spécifiquement par la présente invention, est celui de l'isolation acoustique à bord des véhicules de transport de personnes, du type précité. Ce problème est de plus en plus aigu, notamment en regard des requis de confort mis en place à bord de ces véhicules. A titre d'exemple, pour des trains de grande ligne, on impose désormais d'utiliser les plateformes d'accès, aux voyageurs désirant téléphoner. Dans ces conditions on conçoit que les vantaux, équipant les portes d'accès au train, doivent présenter des propriétés significatives d'isolation acoustique.

On connaît déjà des vantaux ayant une épaisseur structurelle comprise typiquement entre 25 et 50 millimètres, dont l'âme du sandwich est collée et réalisée à base de mousse rigide ou de nid d'abeille. L'utilisation de ce sandwich est un inconvénient, en termes de performance acoustique. En effet, ce type de sandwich présente un indice d'affaiblissement acoustique pondéré Rw peu satisfaisant, de l'ordre de 25 à 32 dB suivant la norme ISO 717-1 en fonction des configurations.

Afin d'améliorer ces performances acoustiques, on a proposé d'augmenter la masse surfacique du panneau. A cet effet on ajoute, au sandwich décrit ci-dessus, par exemple des feuilles de produits bitumineux, ou alors on augmente l'épaisseur ou la masse volumique des parements. A titre de variante, on utilise une coque acoustique complète découplée de la structure.

Cette dernière solution présente cependant les inconvénients suivants. En effet, pour être véritablement efficace, la coque acoustique doit présenter une épaisseur de l'ordre de 20 millimètres. La présence de cette coque nécessite donc de réduire l'épaisseur de la zone structurelle du vantail, étant donné que l'épaisseur totale de celui-ci doit être sensiblement invariante. Cela a pour effet d'augmenter fortement la masse de ce vantail, pour conserver le même comportement aux sollicitations mécaniques. De plus, la porte ainsi réalisée présente au voyageur une surface non structurelle. Par conséquent, cette dernière est davantage sensible aux effets de poinçonnement, dus par exemple à un coup de valise.

Par ailleurs on connait des murs anti-bruit, disposés notamment au voisinage des infrastructures routières afin de protéger les riverains, à l'égard des nuisances sonores. L'enseignement de ces murs anti-bruit ne peut pas être transposé, de manière simple, à un vantail de porte tel que visé par l'invention. En effet ces murs sont des constructions fixes, lourdes et volumineuses, dont les matériaux constitutifs et les caractéristiques mécaniques ne sont pas adaptées à un vantail équipant un véhicule mobile, se déplaçant le plus souvent à de vitesses élevées. Par ailleurs, dans le cas d'un mur anti-bruit, les bruits à atténuer sont d'origine externe alors que, dans le cas d'un vantail de véhicule, la source sonore est essentiellement générée par le déplacement proprement dit du véhicule.

Afin de remédier aux inconvénients détaillés ci-dessus, la demanderesse a proposé, dans le brevet français 3 072 333, d'agencer le remplissage du vantail de manière spécifique. En substance, il est prévu un corps de remplissage réalisé en un matériau rigide, ainsi qu'au moins un pavé formé en un matériau isolant acoustique. Cette solution permet d'atténuer, de façon significative, les nuisances sonores subies par les passagers du véhicule de transport équipé de ce vantail. Par ailleurs, ce dernier bénéficie d'un comportement mécanique satisfaisant, en particulier en termes de rigidité globale.

On mentionnera également le document DE 10 2014 210771, lequel divulgue une porte extérieure de véhicule ferroviaire dont le vantail est équipé d'un matériau d'isolation thermique. Un tel matériau est en l'occurrence formé par une couche comprenant un aérogel. L'enseignement de ce document, qui se concentre essentiellement sur l'aspect thermique, n'est pas prometteur dans le cadre de la présente invention qui vise avant tout l'aspect acoustique.

On citera enfin le document DE 699 36 046, qui a pour objet un élément multicouches d'isolation phonique, comprenant des couches externes ainsi qu'une couche centrale en matière plastique. Ce document traite plus particulièrement du domaine de la construction de bâtiments, et non pas de vantaux de portes de véhicules comme la présente invention. Par ailleurs, le mode de réalisation préféré consiste en une succession de couches continues. Par conséquent, l'enseignement de ce document n'est pas applicable à un vantail de porte de véhicule de transport. En effet, selon la législation, un tel vantail est nécessairement pourvu d'une vitre, dans le cadre d'une obligation de type sécuritaire. Cette vitre permet ainsi aux voyageurs de bénéficier d'un visuel sur l'extérieur, afin d'identifier la présence ou l'absence d'un quai.

On notera également que, de manière plus générale, l'homme du métier n'est pas incité à prendre en compte ce document DE 699 36 046, étant donné que son enseignement va à l'encontre de certains objectifs primordiaux d'une porte de véhicule de transport de personnes. DE 699 36 046 décrit ainsi, entre autres, des parois en béton d'une grande épaisseur. Au contraire, le vantail d'une porte de véhicule doit être aussi mince que possible afin de ménager le plus d'espace possible aux voyageurs, tout en empiétant au minimum sur le gabarit extérieur. Par ailleurs DE 699 36 046 divulgue des exemples de bâtiments fixes, dont la construction n'est pas compatible avec un vantail qui est d'une part mobile par rapport au châssis de la porte, cette dernière étant d'autre part en mouvement par rapport au référentiel terrestre.

Bien que le vantail objet de ce brevet français 3 072 333 apporte des avantages significatifs vis-à-vis de l'État de la technique, la demanderesse souhaite encore améliorer les performances de ce vantail.

Dans ces conditions, un premier objectif de la présente invention est de proposer un vantail à très haute performance acoustique, en particulier supérieure à celle conférée par la solution décrite dans le brevet français 3 072 333.

Un autre objectif de l'invention est de proposer un tel vantail présentant une rigidité satisfaisante.

Un autre objectif de l'invention est de proposer un tel vantail, dont le prix de revient est raisonnable et dont la construction peut être mise en oeuvre de façon commode.

### Objets de l'invention

Selon l'invention, au moins un des objectifs ci-dessus est atteint au moyen d'un vantail (1 ; 101) de porte pour un véhicule de transport de personnes, selon la revendication 1 annexée.

D'autres caractéristiques avantageuses du vantail conforme à l'invention font l'objet des revendications 2 à 12 annexées.

L'invention a également pour objet une porte pour véhicule de transport, notamment du type train, tramway, métros ou encore trolleybus ou bus, comprenant un dormant solidaire du bâti dudit véhicule, ainsi qu'au moins un vantail (1 ; 101) tel que défini ci-dessus, monté mobile par rapport audit dormant.

L'invention a enfin pour objet un véhicule de transport, notamment du type train, tramway, métros ou encore trolleybus ou bus, comprenant au moins une porte telle que définie ci-dessus.

### Description des figures

L'invention va être décrite ci-après, en référence aux dessins annexés, donnés uniquement à titre d'exemples non limitatifs, dans lesquels :
[Fig. 1] est une vue en perspective, illustrant un vantail pour porte de véhicule conforme à un premier mode de réalisation de l'invention, le parement intérieur de ce vantail n'apparaissant pas sur cette vue.
[Fig. 2] est une vue en perspective illustrant plus particulièrement une plaque de remplissage rigide, appartenant au vantail de la figure 1.
[Fig. 3] est une vue en perspective, illustrant plus particulièrement différents pavés acoustiques équipant le vantail de la figure 1.
[Fig. 4] est une vue en section, selon la ligne IV-IV de la figure 1.
[Fig. 5] est une vue de face, à plus grande échelle, illustrant le détail V de la figure 1.
[Fig. 6] est une vue de face, à plus grande échelle, illustrant le détail VI de la figure 1.
[Fig. 7] est une vue en coupe, analogue à la figure 4, illustrant une variante du vantail conforme au premier mode de réalisation de l'invention.
[Fig. 8] est une vue de face, illustrant de manière partielle un vantail conforme à un second mode de réalisation de l'invention.
[Fig. 9] est une vue en perspective, illustrant de manière éclatée les différents éléments constitutifs illustrés sur la figure 8.
[Fig. 10] est une vue en section, selon la ligne X-X de la figure 8.
[Fig. 11] est une vue en perspective, à plus grande échelle, illustrant le détail XI de la figure 9.
[Fig. 12] est une vue en section, analogue à la figure 10, illustrant une variante du vantail conforme au second mode de réalisation de l'invention.

Les références numériques suivantes sont utilisées dans la présente description :

| | |
|---|---|
| 1 Vantail | 10,12 Parements |
| 11, 13 ouvertures de 10,12 | 14 Vitre |
| 20 Remplissage | 25 Bandes de séparation |
| 30 Région remplissage rigide | E30 Epaisseur de 30 |
| 31,32 Faces frontales de 30 | 34 Découpe de 30 |
| 36 Renfoncements | 38, 39 Encoches de 30 |
| 35 Plots de 30 | 40 Pavés |
| 40lnf,40Lat groupes de pavés | 41, 42 Faces frontales de 40 |
| 43, 44 Faces sup/inf de 40 | 45, 46 Faces AR/AV de 40 |
| 47 Couche haute densité | 48 Evidements |
| 50 Espace intercalaire | 50Inf,50Lat groupes d'espaces 50 |
| 52-56 Intervalles 40-50 | 55 Zone interstitielle |
| d52-d56 Distance de 52-56 | 90,92 Traverses |
| 94,96 Montants | Fig 7 = mêmes réf avec « ' » |
| P30 plan médian | 30a, 30b demi-plaques |
| 42', 43' Nervures | Fig 8 à 11 = mêmes réf + 100 |
| 154,164 découpes dans 130,140 | 170, 180 Treillis |
| 150 espaces intercalaires | 150Inf,150Lat groupes d'espaces 150 |
| 160 espaces intercalaires | 160Inf,160Lat groupes d'espaces 160 |
| 172, 174 Bandes de 170 | 182, 184 Bandes de 180 |
| 176, 186 Jonctions entre bandes | Cx Centre de x (150, 160, 176, 186) |
| 177, 187 Evidements partiels | 178, 188 Saillies |
| 152 Pavé (fig 12) | 158 Zone interstitielle |

### Description détaillée

Les figures annexées illustrent un vantail conforme à un premier mode de réalisation de l'invention, lequel est désigné dans son ensemble par la référence 1. Ce vantail forme l'ouvrant d'une porte, équipant un véhicule de transport. Cette porte comprend également un dormant de type classique, non représenté sur les figures, lequel est disposé à la périphérie d'une ouverture ménagée dans la caisse de ce véhicule. Cette porte peut être munie d'un unique vantail conforme à l'invention, ou bien d'au moins deux tels vantaux.

Sur les différentes figures, les proportions réelles des différentes pièces constitutives ne sont pas nécessairement représentées à l'échelle, dans un but de clarté des dessins. Par ailleurs ces proportions peuvent varier d'une figure à l'autre, afin de mieux mettre l'accent sur les différentes caractéristiques de l'invention.

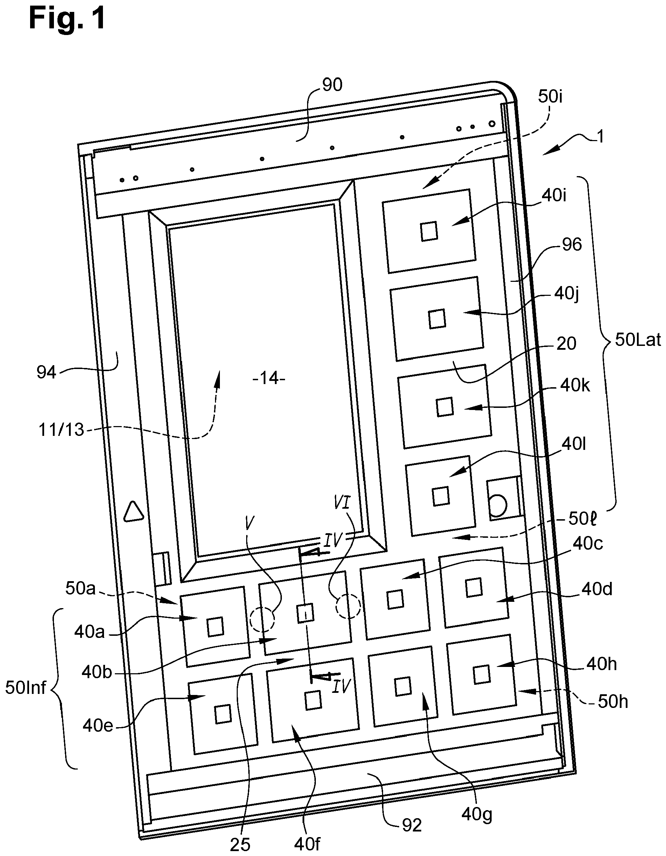

Dans l'exemple illustré, le vantail 1 équipe un véhicule de transport, du type train de banlieue. L'invention trouve cependant son application à des vantaux destinés à équiper d'autres véhicules de transport tels que notamment des tramways, des trolleybus, des bus, des métros, ou encore des trains différents de celui mentionné ci-dessus. Dans ce qui suit, on suppose que le vantail 1 est vertical, notamment en référence à la figure 1. Par ailleurs, les termes « intérieur » et « extérieur » sont utilisés en référence à la caisse du véhicule de transport équipé de ce vantail.

Le vantail 1 comprend essentiellement :
- un parement intérieur 10 ;
- un parement extérieur 12 ;
- un remplissage 20 occupant une partie du volume intérieur, délimité par les deux parements 10 et 12. Ce remplissage, qui constitue un élément essentiel de l'invention, va être détaillé plus en détail dans ce qui suit.
- des éléments mécaniques périphériques 90 à 96, assurant notamment des fonctions de structure et d'étanchéité.

Chaque parement 10 ou 12, de type connu en soi, est réalisé en tout matériau approprié. Il est typiquement formé par une tôle métallique, de préférence en alliage d'aluminium, en acier inoxydable ou en matériau composite, dans laquelle est ménagée une ouverture respective 11 ou 13 destinée à l'installation d'une vitre 14 (voir figure 1). Ces parements 10 et 12 présentent des dimensions sensiblement identiques. A titre d'exemple non limitatif, leur hauteur est comprise entre 1 900 et 2 500 millimètres, leur largeur est comprise entre 600 et 1 200 millimètres, alors que leur épaisseur est comprise entre 25 et 60 millimètres.

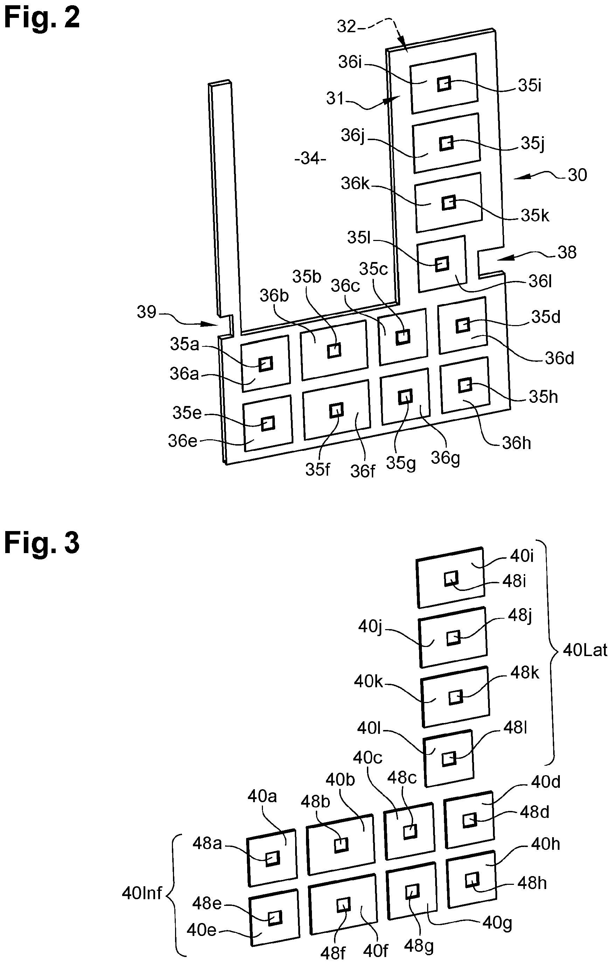

Comme montré notamment en figure 2, le remplissage 20 comporte tout d'abord une première région 30, dite de remplissage rigide, laquelle est formée par une plaque réalisée par exemple par usinage ou moulage. Au sens de l'invention le terme rigide signifie que le module de Young de la plaque 30 possède une valeur relativement élevée, ce qui lui permet de résister aux contraintes habituelles subies par le vantail. De façon avantageuse ce module de Young est supérieur à 50 MPa (mégapascals), notamment à 60 Mpa, en étant typiquement compris entre 80 et 120 MPa. Dans l'exemple illustré, cette plaque est monobloc, à savoir formée d'un seul tenant. Cependant, à titre de variante non représentée, on peut prévoir d'utiliser plusieurs plaques de plus petites dimensions frontales, disposées les unes à côté des autres.

La plaque 30 de remplissage rigide est réalisée en un premier matériau, qui présente des caractéristiques de rigidité relativement élevées, mais en revanche des propriétés acoustiques relativement faibles. Ce premier matériau, de type classique, est entre autres une mousse de polyuréthane (PU), une mousse de polyéthylène téréphtalate (PET) ou encore tout autre matériau approprié, de type classique. A titre d'exemple, la masse volumique typique de ce premier matériau est voisine de 100 kg par mètre cube.

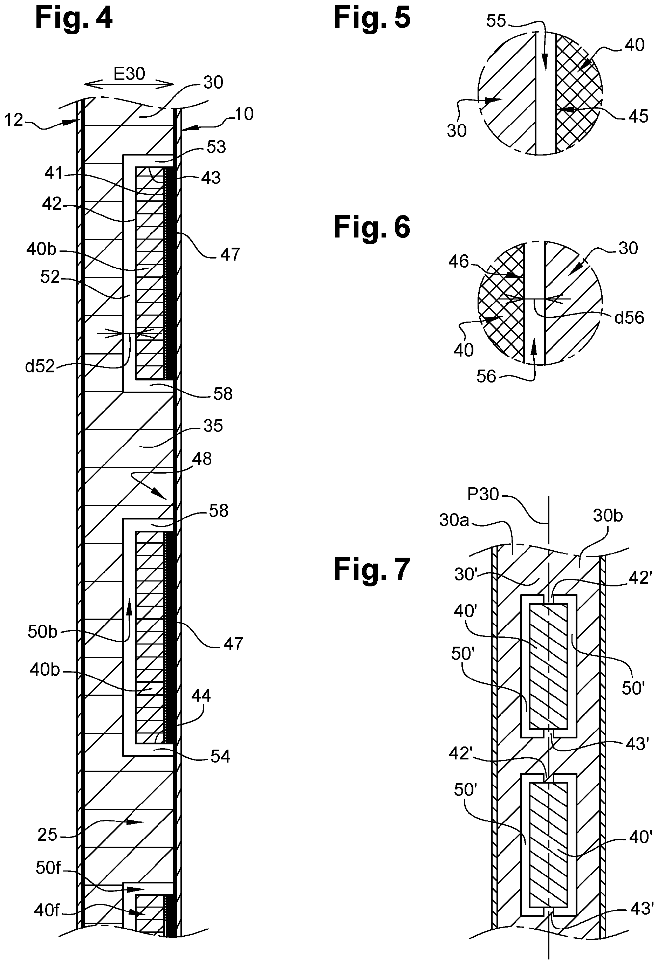

Cette plaque 30 présente une épaisseur maximale, notée E30 (figure 4), qui correspond sensiblement à l'écartement entre les deux parements 10 et 12. A titre d'exemple, cette épaisseur est par conséquent comprise entre 20 et 60 millimètres. On note 31 et 32 les deux faces frontales de cette plaque, respectivement intérieure et extérieure, lesquelles sont fixées contre les parements respectifs 10 et 12. De manière préférée, cette fixation est de type permanent, notamment par collage.

La plaque 30 est tout d'abord creusée d'une découpe 34, qui est dite traversante dans la mesure où elle débouche sur les faces frontales opposées 31 et 32. Cette découpe permet le dégagement pour la vitre 14 précitée. Par ailleurs, cette plaque 30 comporte plusieurs renfoncements 36, formant des logements de réception pour des secondes régions 40 appartenant au remplissage 20, qui vont être détaillées ci-après. Ces logements sont borgnes, dans la mesure où ils débouchent uniquement sur la face frontale intérieure 31 de la plaque 30. Enfin cette plaque est creusée au moyen d'encoches latérales 38 et 39, qui permettent l'insertion de composants classiques non représentés, tels que des poignées ou des verrous de types connus en soi.

Dans ce premier mode de réalisation, chaque seconde région, qui est dite isolante au sens acoustique, est formée par un pavé de forme parallélépipédique. Dans l'exemple illustré, on retrouve tout d'abord deux lignes de pavés 40a à 40d, ainsi que 40e à 40h, qui sont situées au-dessous de la vitre 14. Ces deux lignes forment un premier groupe de pavés, encore dénommé groupe inférieur 40lnf, comme référencé sur la figure 3. On retrouve également une rangée de pavés supplémentaires 40i à 40l, qui s'étendent sur le côté de la vitre précitée. Cette rangée forme un second groupe de pavés, encore dénommé groupe latéral 40Lat, comme référencé sur cette même figure 3. Sur la figure 2, on note 36a à 36l les différents renfoncements, qui sont destinés à la réception des pavés décrits ci-dessus.

Dans le mode de réalisation illustré notamment sur la figure 1, les pavés 40a, 40c, 40d, 40e ainsi que 40g et 40h sont sensiblement identiques. Dans cet esprit on peut considérer que la dimension de ces différents pavés constitue une taille dite standardisée, étant entendu qu'il est préférable de fabriquer le moins possible de tailles de pavés différentes, pour des raisons de simplicité. Néanmoins, la taille et la forme de certains pavés peuvent être adaptées localement à la présence de certains composants, comme des boutons poussoirs, des condamnations ou encore des poignées. Ainsi, dans le présent mode de réalisation, les pavés 40b et 40f présentent une largeur légèrement supérieure à celle des pavés ci-dessus. Par ailleurs, les pavés 40i à 40k sont sensiblement identiques, alors que le pavé 40l possède une largeur légèrement inférieure du fait de la présence d'un composant tel une poignée.

Comme cela ressort de ce qui précède, le nombre, la taille et la disposition des différents pavés sont donnés uniquement à titre indicatif. En d'autres termes ces différents paramètres, caractéristiques des pavés 40, sont susceptibles de varier d'un vantail à l'autre sans cependant sortir du cadre de l'invention.

Les pavés ci-dessus sont réalisés en un deuxième matériau, en particulier une mousse à cellules ouvertes présentant une faible densité, une laine de verre, ou encore une laine minérale comportant des caractéristiques d'absorption. Ce matériau peut être de type tissé, ou bien non tissé. Ce deuxième matériau, qui est dénommé matériau acoustique au sens de l'invention, est différent du premier matériau constitutif de la plaque 30 en ce qu'il présente des propriétés d'isolation acoustique nettement supérieures à celles du premier matériau. A cet effet ce deuxième matériau présente une souplesse bien supérieure à celle du premier matériau, à savoir que le module de Young de ce deuxième matériau est nettement inférieur à celui du premier matériau. De façon avantageuse le module de Young dit apparent de ce deuxième matériau est typiquement inférieur à 50 kPa (kilopascals), notamment inférieur à 10 kPa.

Conformément à l'invention, les différents logements présentent des dimensions supérieures à celles des pavés, qui y sont reçus. En référence aux figures 4 à 6, on dénomme les six faces périphériques d'un pavé 40. On note ainsi 41 et 42 les faces frontales opposées, ainsi que 43 et 44 les faces latérales respectivement supérieure et inférieure (figure 4). Sur les figures 5 et 6 on note 45 et 46 les faces latérales respectivement arrière et avant du pavé 40, en référence au sens de marche du véhicule.

Chaque pavé est fixé, sur le parement intérieur, au niveau de sa première face frontale 41. De manière avantageuse, une couche 47 d'un matériau à forte densité, est intercalée entre cette face frontale et ce parement intérieur. Cette couche 47 est typiquement formée par un produit bitumineux ou encore de nature viscoélastique, ayant des caractéristiques d'amortissement. Dans l'exemple illustré, on retrouve deux couches de collage non représentées, dont l'une permet la fixation du pavé sur la couche 47, et dont l'autre permet la fixation de cette couche 47 sur le parement intérieur.

En référence notamment aux figures 4 à 6, les faces 42 à 46 du pavé 40 délimitent, avec les parois en regard de la plaque 30, un espace intercalaire désigné dans son ensemble par la référence 50. Cet espace 50 est formé par différents intervalles 52 à 56, s'étendant entre la plaque et les faces précitées 42 à 46. On notera que le pavé 40 se trouve en contact, par une unique de ses faces, avec le parement intérieur. En revanche, ses cinq autres faces sont distantes de la plaque 30 ceux qui, comme on le verra dans ce qui suit, est particulièrement avantageux sur le plan acoustique.

Étant donné que chaque espace intercalaire entoure un pavé respectif, on retrouve deux groupes d'espaces intercalaires correspondant aux groupes de pavés tels qu'illustrés à la figure 3. On note ainsi, de manière analogue à ce qui a été décrit ci-dessus, un groupe inférieur 50Inf d'espaces intercalaires, formé par les espaces intercalaires 50a à 50h de la figure 1. Par ailleurs le groupe latéral 50Lat est formé par les espaces intercalaires 50i à 50l de la figure 1. On notera que, sur cette figure 1, on n'a pas référencé l'ensemble de ces espaces intercalaires, afin de ne pas surcharger le dessin. Des espaces intercalaires adjacents sont mutuellement séparés par une bande, réalisée en matériau rigide. Sur la figure 4, on a représenté l'une 25 de ces bandes, laquelle sépare le pavé 40b et son espace intercalaire 50b, par rapport au pavé 40f et à son espace intercalaire 50f.

On note d52 à d56 la dimension de chaque intervalle, à savoir la plus petite distance séparant la plaque vis-à-vis d'une face 42 à 46 respective. L'homme du métier choisira chaque dimension de sorte que, lors des éventuelles déformations subies par le pavé en service, les faces précitées ne viennent pas en contact avec la plaque. Dans cet esprit chacune des dimensions ci-dessus, lesquelles définissent ce qui est dénommé « l'épaisseur » de l'espace intercalaire 50, est typiquement comprise entre 3 mm et 8 mm. En particulier, ces différentes dimensions d52 à d56 sont sensiblement égales les unes aux autres.

Par ailleurs, comme le montre notamment la figure 4, la plaque 30 est avantageusement pourvue de différents plots 35a à 35l, qui font saillie à partir du fond de chaque logement en direction du parement intérieur. Dans ces conditions, chaque plot s'étend à travers d'un évidement central 48a à 48l, ménagé dans un pavé respectif. En service ces plots assurent une fonction de renfort, notamment en s'opposant à un éventuel affaissement des pavés. On notera que les plots ne sont pas en contact avec les pavés, au travers desquels ils s'étendent. Ainsi, en référence à la figure 4, les faces périphériques de chaque plot 35 délimitent, avec les parois de l'évidement 48 correspondant, une zone interstitielle 58. Les dimensions de cette dernière sont voisines de celles de l'espace intercalaire 50, tel que décrit ci-dessus, afin d'éviter tout contact en service entre les faces en regard du plot et du pavé.

On conçoit que, du fait de la présence de l'espace intercalaire 50, le remplissage délimité entre les parements n'est pas entièrement occupé par un matériau solide. Ainsi, cet espace intercalaire est rempli au moyen d'un gaz. En l'absence d'opérations supplémentaires, ce gaz se trouve de façon naturelle formée par l'air ambiant. Cependant, à titre de variante, on peut prévoir d'injecter un autre type de gaz dans l'espace intercalaire.

Un cadre, formé par deux traverses 90 et 92 et deux montants 94 et 96, est fixé sur les parements 10 et 12, en périphérie de la plaque 30 (voir en particulier la figure 1). Cette fixation est assurée de manière classique, notamment par collage. Ces traverses et ces montants sont tout d'abord creusés de gorges respectives, permettant la réception de joints d'étanchéité non représentés. Par ailleurs, ces traverses et ces montants portent des éléments supplémentaires, également non représentés, assurant les liaisons mécaniques avec le bâti du véhicule. Les différents moyens mécaniques, auxquels il est fait référence dans le présent paragraphe, sont de type classique de sorte qu'ils ne sont pas décrits plus en détail dans ce qui suit.

On notera que l'invention vise tout particulièrement des véhicules équipés de moyens d'étanchéité à l'air, notamment tels que décrits au paragraphe précédent pour la porte. En effet, en l'absence de tels moyens, l'isolation phonique du véhicule est très fortement pénalisée.

Le dimensionnement du vantail 1 ci-dessus, en particulier de la plaque 30 et de ses renfoncements 36, ainsi que des pavés 40, est similaire à celui décrit dans le brevet français 3 072 333 discuté ci-dessus. De façon générale l'homme du métier s'assurera de d'obtenir une atténuation acoustique satisfaisante, tout en préservant la tenue mécanique globale du vantail. En particulier l'homme du métier choisira avantageusement une plage comprise entre 0.25 et 0.7, notamment entre 0.4 et 0.6, pour le rapport entre la surface frontale totale des pavés 40 et la surface frontale de la plaque 30 (en ne tenant pas compte de la surface de la découpe 34). Le positionnement des différents pavés tiendra également compte des contraintes, dues à la géométrie proprement dite du vantail.

La figure 7 illustre une variante du premier mode de réalisation, décrit ci-dessus. Sur cette figure 7 les éléments mécaniques analogues à ceux des figures 1 à 6 y sont affectés des mêmes numéros de référence, auxquelles sont ajoutés le signe « ' ».

Selon la variante de la figure 7, les pavés acoustiques 40 ne sont pas placés au contact du parement intérieur. Au contraire ces pavés 40' sont distants du parement intérieur, c'est-à-dire qu'ils sont prévus en position dite « médiane », sensiblement au milieu des parements 10 et 12. Comme dans la variante principale, ces pavés 40' sont séparés des parois de leurs logements de réception, par un espace intercalaire 50'.

Sur le plan constructif, on peut prévoir de réaliser la plaque 30' sous la forme de deux demi-plaques 30a et 30b, symétriques par rapport au plan vertical médian P30 de cette plaque. Ces demi-plaques sont alors fixées l'une par rapport à l'autre, notamment par collage. Afin d'assurer la stabilité de chaque pavé 40', on prévoit que la plaque 30' est munie de moyens de maintien en place de ce pavé. Dans l'exemple illustré, ces moyens de maintien sont réalisés sous forme de nervures 42' et 43', venant en appui contre les faces respectivement supérieure et inférieure du pavé.

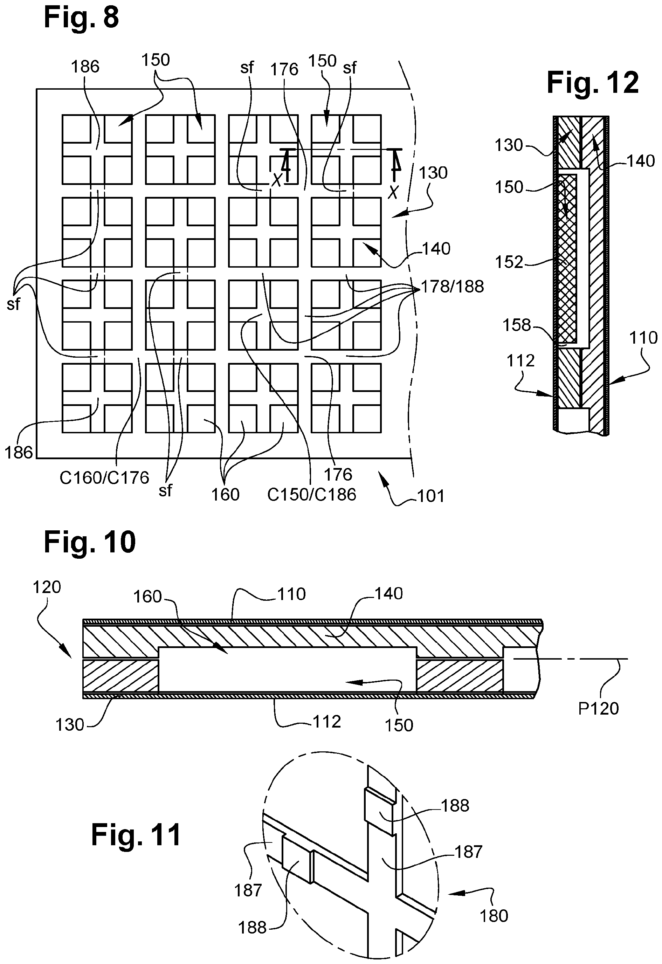

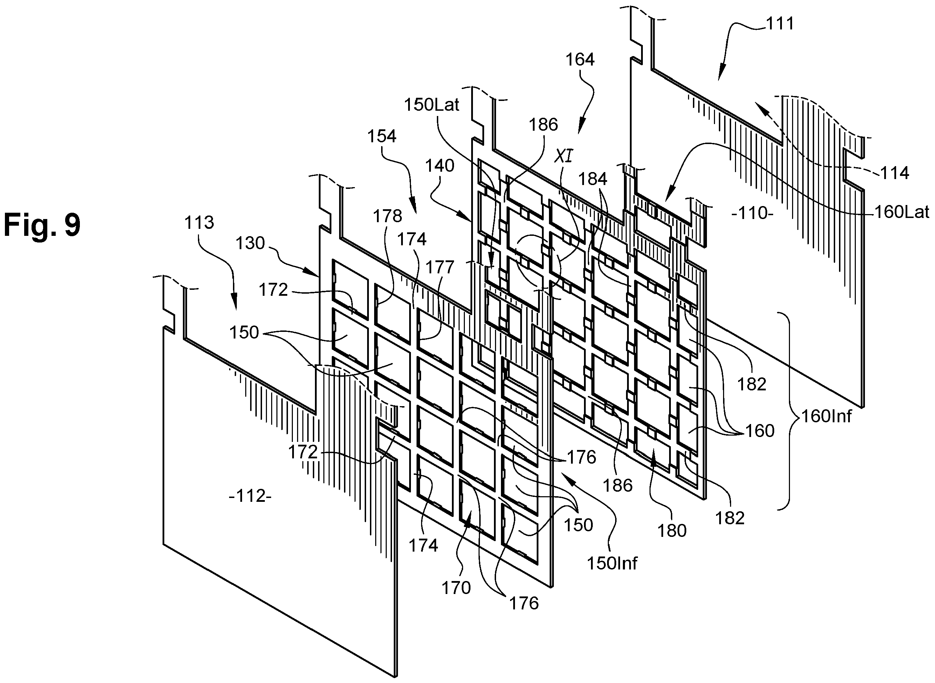

Les figures 8 à 11 illustrent un vantail 101, lequel est conforme à un second mode de réalisation de l'invention. Sur ces figures 8 à 11 les éléments mécaniques, analogues à ceux illustrés sur les figures 1 à 6, y sont affectés des mêmes numéros de référence augmentés du nombre 100. La figure 8 illustre, de façon partielle, la partie basse de ce vantail, à savoir celle située au-dessous de la vitre de ce vantail. À cet effet, on a illustré des lignes brisées en haut de cette figure 8. En revanche la perspective éclatée de la figure 9 illustre, de façon partielle, la partie du vantail s'étendant immédiatement au-dessus de cette vitre. On a également illustré des lignes brisées, en haut de cette figure 9.

Ce second mode de réalisation diffère du premier mode ci-dessus, en particulier en ce qui concerne la nature et la structure de la seconde région 140 du remplissage 120. Ainsi, cette seconde région 140 n'est pas réalisée en un matériau dont les propriétés d'isolation acoustique sont supérieures à celles du matériau constitutif de la première région 130. Dans l'exemple illustré, ces régions sont sensiblement identiques, à savoir qu'elles sont réalisées sous la forme de deux plaques adjacentes 130 et 140, symétriques par rapport au plan vertical médian P120 du remplissage 120. Par conséquent l'épaisseur de chaque demi-plaque est égale à la moitié de celle E30 de la plaque du premier mode de réalisation. Comme cela est représenté de façon partielle sur la figure 9, les plaques 130 et 140 sont typiquement creusées chacune d'une découpe 154 et 164 analogue à celle 34 de la plaque 30. En revanche, afin de ne pas surcharger le dessin, on n'a pas représenté les encoches latérales, analogues à celles 36 de la plaque 30.

Chaque plaque 130, 140 comporte un treillis respectif 170,180, lequel est formé par une pluralité de bandes de matière respectivement horizontales 172,182 et verticales 174,184. Les bandes de matière, appartenant à un même treillis, se croisent en une multiplicité de jonctions 176,186. Ces bandes sont ajourées par des échancrures, lesquelles forment des espaces intercalaires 150 et 160 au sens de l'invention. Dans l'exemple illustré chaque échancrure est dite traversante, c'est-à-dire qu'elle s'étend de part et d'autre du treillis.

Comme dans le premier mode de régulation, on retrouve une pluralité à la fois d'espaces intercalaires 150, ainsi que d'espaces intercalaires 160. Comme le montre plus particulièrement la figure 9, les espaces intercalaires 150 sont répartis en un groupe inférieur 150Inf et un groupe latéral 150Lat. Par ailleurs les espaces intercalaires 160 sont répartis en un groupe inférieur 160lnf et un groupe latéral 160Lat. La répartition de ces différents groupes d'espaces intercalaires est analogue à celle décrite ci-dessus, en référence aux groupes de pavés 40lnf et 40Lat de la figure 3. Chaque groupe latéral 150Lat et 160Lat est illustré de façon partielle, étant entendu qu'il possède la même structure que le groupe inférieur respectif 150Inf et 160Inf. Par ailleurs chacun de ces groupes latéraux est hachuré dans un but de clarté, afin de mieux le distinguer par rapport aux éléments structurels adjacents.

En vue de face, comme le montre la figure 8, ces treillis 170,180 et, par conséquent, les espaces intercalaires, sont décalés l'un par rapport à l'autre. Notons C150 et C160 le centre des échancrures, ainsi que C176 et C186 le centre des jonctions. Chaque centre C150 d'une échancrure, appartenant à la première plaque 130, est confondu avec chaque centre C186 d'une jonction, appartenant à l'autre plaque 140 alors que, de façon conjuguée, chaque centre C160 est confondu avec chaque centre C176. En référence à la figure 10, vue de côté, chaque échancrure 150 communique avec une échancrure adjacente 160.

Par ailleurs les différentes bandes présentent des évidements partiels 177,187, lesquels délimitent des saillies 178,188. La figure 11 illustre, à plus grande échelle, certains évidements 187 et certaines saillies 188, étant entendu que les évidements 177 et les saillies 178 leur sont analogues. Ces saillies 178 et 188 forment des zones de contact permettant la fixation, notamment par collage, entre les plaques 130 et 140. En vue de face, chaque saillie est située au niveau d'une bande respective, sensiblement au milieu de deux jonctions adjacentes.

En référence à la figure 8, on note sf la surface frontale de chaque zone de contact et fixation, laquelle correspond sensiblement à la surface frontale de contact entre les saillies adjacentes 178,188. Par ailleurs, on note SF la somme de toutes les surfaces frontales sf. Dans la région formée par les treillis 170 et 180, les plaques 130 et 140 sont en contact uniquement au niveau de leurs différentes zones de fixation. Par conséquent, SF est également dénommée surface frontale globale de contact entre lesdites plaques. Comme le montre cette figure 8, cette surface globale de contact est significativement inférieure à la surface S170 de chaque treillis. De façon avantageuse, sur un prototype industriel, le rapport SF/S170 a été inférieur à 17 %. En d'autres termes, dans cet exemple, plus de 83 % des zones solides de contact entre les treillis adjacents 170 et 180 a été supprimé.

Dans ce second mode de réalisation on peut ménager des treillis, analogues à ceux décrits ci-dessus, sur une, voire deux partie(s) latérale(s) de la vitre du vantail. De façon générale, dans l'un ou l'autre des modes de réalisation, il est avantageux de prévoir le plus grand nombre possible de zones dont l'acoustique est améliorée grâce à la présence des espaces intercalaires. La surface totale de ces zones sera limitée, d'une part, par un souci de tenue mécanique globale du vantail et, d'autre part, en tenant compte de l'emplacement prédéfini des différents éléments habituels du vantail.

La figure 12 illustre une variante du second mode de réalisation, décrit ci-dessus. Conformément à cette variante, au moins un espace intercalaire 150 reçoit un pavé 152, réalisée en un matériau analogue à celui constitutif d'un pavé 40 du premier mode de réalisation. Ce pavé 152 est fixé par l'une de ses faces sur le parement en regard, ici celui 112, alors que ses autres faces sont séparées des faces en regard, appartenant aux plaques respectives 130 et 140. On note 158 la zone interstitielle ainsi formée, dont les dimensions sont typiquement voisines de l'espace intercalaire 50; ou bien de la zone interstitielle 58 du premier mode de réalisation. On peut également prévoir, de manière non représentée, de fixer au moins un pavé auxiliaire supplémentaire sur l'autre parement 110.

À titre de variante, non représentée sur cette figure 12, on peut tout d'abord prévoir qu'une couche d'un matériau à forte densité, analogue à celle 47 du premier mode de réalisation, est intercalée entre le pavé auxiliaire 152 et le parement 112. À titre de variante supplémentaire, également non représentée, on peut prévoir que la région de remplissage rigide 140 est équipée d'un plot de renfort, analogue à celui 35 du premier mode de réalisation, lequel s'étend au travers du pavé auxiliaire. Comme dans ce premier mode de réalisation, les faces en regard du plot et du pavé auxiliaire 152 sont alors séparées par une zone interstitielle, analogue à celle 58 décrite ci-dessus.

L'invention permet d'améliorer les propriétés d'isolation acoustique du vantail, conforme à l'enseignement du brevet français 3 072 333 ci-dessus. On rappellera que, dans ce brevet, il est prévu des pavés acoustiques reçus dans des logements respectifs, dont les dimensions sont analogues à celles des pavés. Il est même précisé que, de façon avantageuse, le logement peut être légèrement plus petit pour favoriser une légère compression du pavé.

Dans ces conditions, en considérant le vantail en vue de côté, l'ensemble du remplissage présent entre les parements opposés est formé uniquement par une succession de couches de matériaux solides. Or la demanderesse a constaté que ce remplissage continu « entièrement solide » ne permet pas, au moins dans certaines conditions, d'assurer une atténuation sonore optimale. Malgré l'utilisation de matériaux spécifiques, ce remplissage continu ne contribue pas à résoudre la problématique des ponts de transmission solidienne vibratoire entre les parements opposés, que l'on rencontre dans les vantaux habituels de l'État de la technique.

Au contraire, la présente invention prévoit d'intégrer, dans une partie de ce remplissage, au moins un espace intercalaire libre de tout matériau solide. Un tel espace intercalaire, occupé par un gaz tel que de l'air, permet d'améliorer l'isolation acoustique globale du vantail sans pour altérer significativement sa tenue mécanique globale. En particulier, la présence des espaces intercalaires permet de rompre, dans une mesure importante, les ponts de transmission solidienne vibratoire présentés ci-dessus. Dans ces conditions, le vantail 1 ou 101 conforme à l'invention présente des propriétés d'isolation acoustique nettement supérieures à celui d'un vantail dit témoin, à savoir un vantail analogue qui n'intégrerait pas de tels espaces intercalaires. En pratique l'homme du métier, désireux de suivre l'enseignement de la présente invention, supprimera autant de ponts de transmission solidienne que possible, tout en s'assurant que le vantail final présente encore les caractéristiques nécessaires de tenue mécanique.

De façon plus détaillée, le vantail 1 conforme au premier mode de réalisation de l'invention inclut des espaces intercalaires 50 autorisant des propriétés d'isolation acoustique bien supérieures à celle d'un vantail témoin, qui serait globalement conforme à l'enseignement du brevet français 3 072 333. En substance, dans ce premier mode de réalisation, le pavé présente des dimensions inférieures à celles de son logement, de façon à délimiter un espace intercalaire. Dans ces conditions, il n'y a avantageusement aucun contact entre le pavé et les parois du logement, du moins en l'absence de contraintes. Par conséquent la demanderesse a constaté que ce jeu, ménagé volontairement entre le pavé et son logement, confère une liberté à la matière constitutive de ce pavé lors des vibrations et résonnances acoustiques. Cela contribue, dans une mesure significative, à l'amélioration des performances d'isolation acoustique de ce vantail.

Par ailleurs le vantail 101 conforme au second mode de réalisation inclut des espaces intercalaires 150 et 160, qui autorisent des propriétés d'isolation acoustique bien supérieures à celle d'un vantail témoin, dont le remplissage serait formé par deux plaques continues accolées l'une à l'autre. La demanderesse a en particulier constaté que la présence des treillis confère des performances d'isolation acoustique très élevées au vantail qui en est équipé, au moins sur certaines bandes de fréquences. En outre, grâce à la présence des treillis, le vantail conforme à ce second mode de réalisation présente une légèreté très satisfaisante.

Le fait de prévoir une pluralité d'espaces intercalaires, aussi bien dans le premier que dans le second mode de réalisation, permet de s'adapter au mieux à la présence nécessaire de la vitre. Cette adaptation est d'autant plus satisfaisante en prévoyant, selon une caractéristique tout particulièrement avantageuse de l'invention, un groupe inférieur combiné à un groupe latéral d'espaces intercalaires.

## Revendications

1. Vantail (1 ; 101) de porte pour un véhicule de transport de personnes, notamment pour porte de tramway, trolleybus, bus, métros ou train, comprenant :
- un parement dit intérieur (10 ; 110) destiné à être placé côté intérieur de la caisse du véhicule et un parement dit extérieur (12 ; 112) destiné à être placé côté extérieur de la caisse du véhicule, lesdits parements délimitant un volume intérieur dudit vantail chaque parement étant creusé d'une ouverture (11,13, 111,113) de réception d'une vitre (14 ; 114)
- un remplissage (20 ; 120) occupant ce volume intérieur, ce remplissage étant creusé d'au moins une découpe (34 ; 134, 144) de réception de ladite vitre (14)
- un cadre structurel (90, 92, 94, 96) s'étendant à la périphérie de l'âme du vantail,
- des moyens de montage, permettant le montage du vantail sur le dormant de ladite porte, **caractérisé en ce que** le remplissage comprend
- au moins une première région (30 ; 130), dite de remplissage rigide, réalisée en un premier matériau, dit matériau de remplissage rigide, possédant un module de Young supérieur à 50 MPa, notamment supérieur à 60 MPa, cette première région recouvrant au moins une partie d'un premier parement, en particulier du parement extérieur
- au moins une seconde région (40 ; 140), réalisée en un second matériau
- une pluralité d'espaces intercalaires (50 ; 150, 160) qui sont séparés mutuellement par des bandes de séparation (25 ; 172, 174, 182, 184), réalisées en ledit premier matériau, chaque espace intercalaire étant occupé par un gaz, notamment de l'air, chaque espace intercalaire étant apte à rompre au moins une partie, avantageusement au moins une partie substantielle, des ponts de transmission solidienne vibratoire entre les parements.

2. Vantail selon la revendication 1, **caractérisé en ce que** les espaces intercalaires comprennent un premier groupe, dit inférieur, d'espaces intercalaires (50)nf ; 150lnf ; 160Inf) s'étendant au-dessous d'une découpe respective (34; 134, 144), ainsi qu'un second groupe, dit latéral, d'espaces intercalaires (50Lat ; 150Lat ; 160Lat) s'étendant sur le côté d'une découpe respective.

3. Vantail (1) selon l'une des revendications précédentes, **caractérisé en ce que** le second matériau présente des propriétés d'isolation acoustique nettement supérieures à celle du premier matériau, ledit second matériau présentant notamment un module de Young nettement inférieur au module de Young dudit premier matériau, de sorte que chaque seconde région (40) forme une région isolante acoustique, destinée à s'opposer à la transmission solidienne vibratoire, chaque région isolante acoustique étant par exemple constituée par un pavé (40), notamment de forme parallélépipédique.

4. Vantail selon la revendication précédente, dans lequel chaque espace intercalaire (50) est ménagé entre les faces en regard de la région de remplissage rigide (30) et d'une région isolante acoustique respective (40), une face frontale (41) de la région isolante acoustique (40) étant notamment fixée contre le parement intérieur (10), alors que les autres faces de cette région isolante acoustique sont notamment distantes des parois de la première région de remplissage rigide (30).

5. Vantail selon l'une des revendications 3 à 4, dans lequel la première région de remplissage rigide (30) comporte au moins un plot (35) de renfort, ce plot faisant saillie au travers de la région isolante acoustique (40) en direction du parement en regard, notamment du parement intérieur, les faces en regard du plot et de la région isolante étant en particulier séparées par une zone interstitielle (58).

6. Vantail selon l'une des revendications 3 ou 5, dans lequel, en vue de côté, chaque région isolante acoustique (40') est placée en position sensiblement médiane, à distance de chaque parement (10,12), la première région de remplissage solide (30) possédant avantageusement des moyens mécaniques de maintien de chaque pavé acoustique placé en position médiane, notamment des nervures (42,43) qui sont aptes à bloquer les faces respectivement supérieures et inférieures de chaque région isolante acoustique.

7. Vantail selon l'une des revendications 3 à 6, dans lequel qu'il est prévu une pluralité de secondes régions, de façon avantageuse un groupe inférieur (40Inf) de secondes régions s'étendant au-dessous de ladite découpe (34), ainsi qu'un groupe latéral (40Lat) de secondes régions s'étendant sur le côté de ladite découpe.

8. Vantail (101) selon l'une des revendications 1 ou 2, dans lequel le second matériau présente des propriétés d'isolation acoustique voisines de celle du premier matériau, le premier et le second matériaux étant en particulier confondus, de sorte que la seconde région forme une seconde région de remplissage rigide (140) recouvrant au moins une partie de l'autre parement, en particulier du parement intérieur (110).

9. Vantail selon la revendication précédente, dans lequel chaque espace intercalaire (150, 160) est ménagé dans le volume d'une région de remplissage rigide respective (130, 140).

10. Vantail selon la revendication 9 dans lequel, en vue de face, les espaces intercalaires (150) de la première région de remplissage (130) sont décalés par rapport aux espaces intercalaires (160) de la seconde région de remplissage.

11. Vantail selon l'une des revendications 8 à 10, dans lequel chaque région de remplissage rigide (130,140) est réalisée sous forme d'un treillis, ce treillis comportant lesdites bandes de séparation (172, 174, 182, 184) ajourées par des échancrures, lesdites échancrures formant ladite pluralité d'espaces intercalaires (150,160).

12. Vantail selon l'une des revendications 8 à 11, dans lequel au moins un espace intercalaire (150) est occupé en partie par un pavé auxiliaire (152), réalisé en un matériau d'isolation acoustique, ce pavé auxiliaire étant de préférence fixé sur un parement sans être en contact avec les régions de remplissage rigide.

13. Porte pour véhicule de transport de personnes, notamment du type train, tramway, métros ou encore trolleybus ou bus, comprenant un dormant solidaire du bâti dudit véhicule, ainsi qu'au moins un vantail (1 ; 101) conforme à l'une quelconque des revendications précédentes, monté mobile par rapport audit dormant.

14. Véhicule de transport de personnes, notamment du type train, tramway, métros ou encore trolleybus ou bus, comprenant au moins une porte conforme à la revendication précédente.

## Patentansprüche

1. Türflügel (1; 101) für ein Personentransportfahrzeug, insbesondere für eine Straßenbahn-, Trolleybus-, Bus-, U-Bahn- oder Zugtür, umfassend:
- eine sogenannte Innenverkleidung (10; 110), die dazu bestimmt ist, auf der Innenseite der Fahrzeugkarosserie angebracht zu werden, und eine sogenannte Außenverkleidung (12; 112), die dazu bestimmt ist, auf der Außenseite der Fahrzeugkarosserie angebracht zu werden, wobei diese Verkleidungen ein Innenvolumen des Flügels begrenzen, wobei jede Verkleidung ausgehöhlt ist und eine Öffnung (11,13, 111,113) zur Aufnahme eines Fensters (14; 114) aufweist.
- eine Füllung (20; 120), die dieses Innenvolumen einnimmt, wobei diese Füllung ausgehöhlt ist und mindestens einen Ausschnitt (34; 134, 144) zur Aufnahme des Fensters (14) aufweist.
- einen Strukturrahmen (90, 92, 94, 96), der sich bis zur Peripherie des Kerns des Flügels erstreckt,
- Montagemittel, die die Montage des Flügels am Rahmen der Tür ermöglichen,
**dadurch gekennzeichnet, dass** die Füllung umfasst
- mindestens einen ersten Bereich (30; 130), genannt starre Füllung, aus einem ersten Material, genannt starres Füllmaterial, mit einem Elastizitätsmodul größer als 50 MPa, insbesondere größer als 60 MPa, wobei dieser erste Bereich mindestens einen Teil einer ersten Verkleidung, insbesondere der Außenverkleidung, abdeckt
- mindestens einen zweiten Bereich (40; 140), hergestellt aus einem zweiten Material
- eine Vielzahl von Zwischenräumen (50; 150, 160), die voneinander durch Trennstreifen (25; 172, 174, 182, 184) aus dem ersten Material getrennt sind, wobei jeder Zwischenraum von einem Gas, insbesondere Luft, eingenommenen ist, wobei jeder Zwischenraum (50; 150, 160) in der Lage ist, mindestens einen Teil, vorteilhafterweise mindestens einen wesentlichen Teil der Festkörper-Schwingungsübertragungsbrücken zu brechen zwischen den Verkleidungen.

2. Flügel nach Anspruch 1, **dadurch gekennzeichnet, dass** die Zwischenräume eine erste Gruppe, genannt untere Gruppe, von Zwischenräumen (501nf; 1501nf; 1601nf), die sich unter einem jeweiligen Ausschnitt (34; 134, 144) erstrecken, umfasst, sowie eine zweite Gruppe, genannt laterale Gruppe, von Zwischenräumen (50Lat; 150Lat; 160Lat), die sich über der Seite einer jeweiligen Aussparung erstrecken.

3. Flügel (1) nach einem der vorhergehenden Ansprüche, **dadurch gekennzeichnet, dass** das zweite Material akustische Isolationseigenschaften aufweist, die deutlich über denen des ersten Materials liegen, wobei das zweite Material insbesondere einen Young-Modul aufweist, der deutlich niedriger ist als der Young-Modul des ersten Materials, so dass jeder zweite Bereich (40) einen akustischen Isolierbereich bildet, der dazu bestimmt ist, der Übertragung von Festkörpervibrationen entgegenzuwirken, wobei jeder akustische Isolierbereich beispielsweise aus einem Block (40) besteht, der insbesondere die Form eines Parallelepipeds hat.

4. Flügel nach dem vorhergehenden Anspruch, bei dem jeder Zwischenraum (50) zwischen den einander zugewandten Flächen des starren Füllbereichs (30) und einem jeweiligen akustischen Isolierbereich (40) vorgesehen ist, wobei eine Vorderseite (41) des akustischen Isolierbereichs (40) insbesondere an der Innenverkleidung (10) befestigt ist, während die anderen Flächen dieses akustischen Isolierbereichs insbesondere von den Wänden des ersten starren Füllbereichs (30) entfernt sind.

5. Flügel nach einem der Ansprüche 3 bis 4, bei dem der erste starre Füllbereich (30) mindestens einen Verstärkungsbolzen (35) umfasst, wobei dieser Bolzen durch den akustischen Isolierbereich (40) in Richtung der Verkleidung hindurchragt, insbesondere der gegenüberliegenden Verkleidung, insbesondere der Innenverkleidung, wobei die dem Bolzen und dem Isolierbereich zugewandten Flächen insbesondere durch eine Zwischenzone (58) getrennt sind.

6. Flügel nach einem der Ansprüche 3 oder 5, bei dem in der Seitenansicht jeder akustische Isolierbereich (40') in einer im Wesentlichen zentralen Position in einem Abstand von jeder Vorderseite (10, 12) des ersten Füllbereichs angeordnet ist, wobei der erste starre Füllbereich (30) vorteilhafterweise mechanische Mittel aufweist, um jeden Akustikblock in der Mittelposition zu halten, insbesondere Rippen (42, 43), die in der Lage sind, die jeweilige Ober- und Unterseite jedes akustischen Isolierbereichs zu blockieren.

7. Blatt nach einem der Ansprüche 3 bis 6, bei dem mehrere zweite Bereiche vorgesehen sind, vorteilhafterweise eine untere Gruppe (40Inf) von zweiten Bereichen, die sich unterhalb des Ausschnitts (34) erstreckt, sowie eine seitliche Gruppe (40Lat) davon zweite Bereiche, die sich auf der Seite des Ausschnitts erstrecken.

8. Flügel (101) nach einem der Ansprüche 1 oder 2, bei dem das zweite Material akustische Isolationseigenschaften aufweist, die denen des ersten Materials nahekommen, wobei das erste und das zweite Material insbesondere kombiniert sind, so dass der zweite Bereich einen zweiten starren Füllbereich (140) bildet, der zumindest einen Teil der anderen Verkleidung, insbesondere der Innenverkleidung (110), bedeckt.

9. Blatt nach dem vorhergehenden Anspruch, bei dem jeder Zwischenraum (150, 160) im Volumen eines jeweiligen starren Füllbereichs (130, 140) vorgesehen ist.

10. Blatt nach Anspruch 9, bei dem in der Vorderansicht die Zwischenräume (150) des ersten Füllbereichs (130) gegenüber den Zwischenräumen (160) des zweiten Füllbereichs versetzt sind.

11. Blatt nach einem der Ansprüche 8 bis 10, bei dem jeder starre Füllbereich (130,140) in Form eines Gitters hergestellt ist, wobei dieses Gitter die durch Kerben perforierten Trennstreifen (172, 174, 182, 184) umfasst, wobei die Kerben die Vielzahl von Zwischenräumen (150,160) bilden.

12. Flügel nach einem der Ansprüche 8 bis 11, bei dem mindestens ein Zwischenraum (150) teilweise von einem Hilfsblock (152) aus schalldämmendem Material eingenommen ist, wobei dieser Hilfsblock vorzugsweise an einer Verkleidung befestigt ist, ohne mit den starren Füllbereichen in Kontakt zu sein.

13. Tür für ein Fahrzeug zur Personenbeförderung, insbesondere vom Typ Zug, Straßenbahn, U- Bahn oder auch Oberleitungsbus oder Bus, mit einem Rahmen, der am Rahmen des Fahrzeugs befestigt ist, sowie mindestens einem relativ zum Rahmen beweglich montierten Flügel (1; 101) nach irgendeinem vorstehenden Ansprüche.

14. Fahrzeug zur Personenbeförderung, insbesondere vom Typ Zug, Straßenbahn, U-Bahn oder auch Oberleitungsbus oder Bus, mit mindestens einer Tür gemäß dem vorstehenden Anspruch.

## Claims

1. Door leaf (1; 101) for a passenger transport vehicle, in particular for a tram, trolleybus, bus, metro or train door, comprising:
- a so-called interior facing (10; 110) intended to be placed on the interior side of the vehicle body and a so-called exterior facing (12; 112) intended to be placed on the exterior side of the vehicle body, said facings delimiting an interior volume of said leaf, each facing being hollowed out with an opening (11, 13, 111, 113) for receiving a window (14; 114)
- a filling (20; 120) occupying this interior volume, this filling being hollowed out with at least one cutout (34; 134, 144) for receiving said window (14)
- a structural frame (90, 92, 94, 96) extending to the periphery of the core of the leaf,
- mounting means, allowing the mounting of the leaf on the frame of said door,
**characterized in that** the filling comprises
- at least one first region (30; 130), called rigid filling, made of a first material, called rigid filling material, having a Young's modulus greater than 50 MPa, in particular greater than 60 MPa, this first region covering at least part of a first facing, in particular of the external facing
- at least one second region (40; 140), made of a second material
- a plurality of interspaces (50; 150, 160) which are separated from each other by separation strips (25; 172, 174, 182, 184), made of said first material, each interspace being occupied by a gas, in particular air, each interspace being capable of breaking at least a part, advantageously at least a substantial part, of the solid vibratory transmission paths between the facings.

2. Leaf according to claim 1, **characterized in that** the interspaces comprise a first group, called lower, of interspaces (50Inf; 150Inf; 1601nf) extending below a respective cutout (34; 134, 144), as well as a second group, called lateral, of interspaces (50Lat; 150Lat; 160Lat) extending on the side of a respective cutout.

3. Leaf (1) according to one of the preceding claims, **characterized in that** the second material has acoustic insulation properties significantly superior to those of the first material, said second material having in particular a Young's modulus significantly lower than the Young's modulus of said first material, so that each second region (40) forms an acoustic insulating region, intended to oppose the vibrational solid transmission, each acoustic insulating region being for example constituted by a block (40), in particular of parallelepiped shape.

4. Leaf according to the preceding claim, in which each intermediate space (50) is provided between the facing faces of the rigid filling region (30) and a respective acoustic insulating region (40), a front face (41) of the acoustic insulating region (40) being in particular fixed against the interior facing (10), while the other faces of this acoustic insulating region are in particular distant from the walls of the first rigid filling region (30).

5. Leaf according to one of claims 3 to 4, in which the first rigid filling region (30) comprises at least one reinforcement stud (35), this stud projecting through the acoustic insulating region (40) towards the facing, in particular the interior facing, the facing faces of the stud and of the insulating region being in particular separated by an interstitial zone (58).

6. Leaf according to one of claims 3 to 5, in which, in side view, each acoustic insulating region (40') is placed in a substantially median position, at a distance from each facing (10, 12), the first solid filling region (30) advantageously having mechanical means for holding each acoustic block placed in the median position, in particular ribs (42, 43) which are capable of blocking the respectively upper and lower faces of each acoustic insulating region.

7. Leaf according to one of claims 3 to 6, wherein a plurality of second regions are provided, advantageously a lower group (40Inf) of second regions extending below said cutout (34), as well as a lateral group (40Lat) of second regions extending on the side of said cutout.

8. Leaf (101) according to one of claims 1 to 2, in which the second material has acoustic insulation properties close to those of the first material, the first and second materials being in particular merged, so that the second region forms a second rigid filling region (140) covering at least part of the other facing, in particular the interior facing (110).

9. Leaf according to the preceding claim, in which each interspace (150, 160) is provided in the volume of a respective rigid filling region (130, 140).

10. Leaf according to one of claims 9, in which, in front view, the interspaces (150) of the first filling region (130) are offset relative to the intermediate spaces (160) of the second filling region.

11. Leaf according to one of claims 8 to 10, in which each rigid filling region (130, 140) is produced in the form of a lattice, this lattice comprising said separation strips (172, 174, 182, 184) perforated by notches, said notches forming said plurality of interspaces (150, 160).

12. Leaf according to one of claims 8 to 11, in which at least one interspace (150) is partly occupied by an auxiliary block (152), made of an acoustic insulation material, this auxiliary block preferably being fixed on a facing without being in contact with the rigid filling regions.

13. Door for a passenger transport vehicle, in particular of the train, tram, metro or trolleybus or bus type, comprising a frame secured to the frame of said vehicle, as well as at least one leaf (1; 101) in accordance with any one of the preceding claims, mounted to move relative to said frame.

14. Passenger transport vehicle, in particular of the train, tramway, metro, trolleybus or bus type, comprising at least one door as claimed in the preceding claim.
